# EUROPÄISCHE PATENTSCHRIFT

(11) **EP 1 645 098 B1**
(45) Veröffentlichungstag und Bekanntmachung des Hinweises auf die Patenterteilung: **06.04.2011**
(21) Anmeldenummer: 04740873.7
(22) Anmeldetag: 09.07.2004
(51) Int. Cl.: H04L 29/06

(54) **VORRICHTUNG UND KOPPELGERÄT, SO GENANNTER SECURE-SWITCH, ZUR SICHERUNG EINES DATENZUGRIFFES**
MECHANISM AND COUPLING DEVICE, SO-CALLED SECURE SWITCH, FOR SECURING A DATA ACCESS
DISPOSITIF ET APPAREIL DE COUPLAGE APPELE COMMUTATION DE SECURITE POUR SECURISER L'ACCES A DES DONNEES

(30) Priorität: 10.07.2003 DE 10331308
(43) Veröffentlichungstag der Anmeldung: 12.04.2006
(73) Patentinhaber: SIEMENS AKTIENGESELLSCHAFT, 80333 München (DE)
(72) Erfinder: ARNOLD, Johann, 90530 Wendelstein (DE); BÖLDERL-ERMEL, Wolfgang, 90530 Wendelstein (DE); GERLACH, Hendrik, 91058 Erlangen (DE); HERBERTH, Harald, 90522 Oberasbach (DE); KÖBINGER, Franz, 90475 Nürnberg (DE)
(86) Internationale Anmeldenummer: PCT/EP2004/007594
(87) Internationale Veröffentlichungsnummer: WO 2005/006705

(56) Entgegenhaltungen:
- EP-A- 1 280 315
- US-A- 5 864 666

## Beschreibung

Die Erfindung betrifft eine Vorrichtung und ein Koppelgerät, einen so genannten Secure-Switch, zur Sicherung eines Datenzugriffes eines ersten Teilnehmers oder mehrerer Teilnehmer, die in einem ersten Teilnetz eines Automatisierungsnetzes angeordnet sind, auf einen zweiten Teilnehmer oder mehrere Teilnehmer, die in einem zweiten Teilnetz eines Automatisierungsnetzes angeordnet sind.

Teilnehmer können beispielsweise Server, Programmiergeräte, Bedien- und Beobachtungstationen, Servicegeräte zur Wartung oder Diagnose, Automatisierungsgeräte, dezentrale Peripherie oder Feldgeräte sein, z. B. Messumformer oder Stellglieder, die in einem gemeinsamen Automatisierungsnetz zur Übertragung von Daten miteinander verbunden sind. Sie sind Bestandteile eines Automatisierungssystems, das zur Überwachung eines technischen Prozesses, z. B. eines Fertigungsprozesses, eingesetzt wird und an sich bekannt ist. Derartige Automatisierungsnetze wurden bisher hierarchisch in mehrere Ebenen eingeteilt, z. B. Prozess-, Automatisierungs- und zentrale Leitebene. Dabei wurden Komponenten der jeweiligen Ebene über eine Datenübertragungseinheit, ein so genanntes Gateway, miteinander verbunden. Automatisierungskomponenten der Prozessebene und/oder der Automatisierungsebene wurden horizontal mittels eines so genannten Feldbussystems und zur nächst höheren Ebene, z. B. zur zentralen Leit- oder Steuerebene, vertikal mittels eines Ethernet-Bussystems miteinander verbunden. Feldbusse sind speziell auf die Erfordernisse der Automatisierungstechnik ausgerichtet. Kommunikationsmedien und Protokolle für Feldbusse sind in der Bürowelt in der Regel nicht verbreitet. Da Zugriffe von der zentralen Leit- und Steuerebene auf die Automatisierungs- oder Feldebene nur über Gateways möglich waren, wurden Hackerangriffe auf die unteren Ebenen des Automatisierungsnetzes erschwert. Zunehmend erfolgt heute die horizontale Verbindung der Automatisierungskomponenten einer Ebene ebenfalls mittels eines Ethernet-Bussystems. Mit der zunehmenden Verbreitung von Ethernet auch auf den unteren Ebenen eines Automatisierungsnetzes wachsen die verschiedenen Ebenen enger zusammen und spezielle Gateways sind aus rein kommunikationstechnischer Sicht nicht länger notwendig. Damit sind Hackerangriffe auch auf die unteren Ebenen eines Automatisierungsnetzes leichter möglich.

Ein weiterer Trend ist die zunehmende Verschmelzung von Büro- und Produktionsnetzen, die als Teilbereiche eines Automatisierungsnetzes angesehen werden können. Daraus ergeben sich insbesondere aus sicherheitstechnischer Sicht neue Probleme. Über das Büronetz in das Produktionsnetz eingetragene Störungen der Automatisierungsgeräte können den Produktionsbetrieb unter Umständen empfindlich stören oder beeinträchtigen. Die damit verbundenen Risiken, z. B. Produktionsausfälle bis hin zu Gefahren für Menschenleben, sind oft deutlich höher als bei Störungen, die auf ein Büronetz begrenzt sind. Störungen des Produktionsnetzes vom Büronetz aus können beispielsweise hervorgerufen werden durch Fehlbedienungen, z. B. wegen Angabe falscher IP-Adressen, Viren, Trojaner oder Würmer, die versuchen, sich über Personal Computer des Büronetzes im Netzwerk auszubreiten, und die dabei unter Umständen auch den Bereich des Produktionsnetzes erreichen, weiterhin durch Mitarbeiter, die beispielsweise TCP/IP-Netzwerk-Tools ausprobieren oder durch Angriffe von Mitarbeitern innerhalb der automatisierungstechnischen Anlage, die, wenn sie passiver Natur sind, als Spionage und, wenn sie aktiver Natur sind, als Sabotage bezeichnet werden können. Es ist daher erforderlich, bestimmte Teile des Automatisierungsnetzes vor unerlaubten Zugriffen zu schützen.

Aus der DE 101 24 800 A1 ist es bekannt, funktions- und/oder geräterelevante Daten zwischen verschiedenen Geräten eines Prozessautomatisierungssystems zumindest zum Teil verschlüsselt auszutauschen. Dadurch soll eine flexible und zugleich sichere Handhabung ausgewählter wichtiger Daten des Prozessautomatisierungssystems ermöglicht werden. Die Verschlüsselung wird direkt in den Endgeräten vorgenommen. Dies erfordert eine größere Leistungsfähigkeit aller Endgeräte, die an einer verschlüsselten Datenübertragung beteiligt sind.

Auf der Internetseite unter der Adresse www.thought.net/jason/bridgepaper/node9.html wurde am 01.04.2003 ein Kapitel "bridging and IPsec" der Öffentlichkeit zugänglich gemacht. Es wird eine Bridge beschrieben, die um IPsec-Fähigkeiten erweitert ist. Auf einer Seite der Bridge eingehende Nachrichten im Ethernet-Format werden entsprechend dem IPsec-Protokoll, das auf Layer 3 des ISO-OSI 7-Schichten-Modells angesiedelt ist, verschlüsselt auf der anderen Seite der Bridge ausgegeben und können so geschützt vor Zugriffen über einen unsicheren Netzwerkabschnitt übertragen werden. Eine Anwendung auf Automatisierungsnetze ist nicht beschrieben.

EP 1280315 offenbart eine Netzwerksicherheitseinheit, angeordnet zwischen einem Host-bsw. Gebraucher-rechner und einem Netzwerk, die eine sichere Kommunikation ermöglicht über ein unsicheres Netzwerk.

Der Erfindung liegt die Aufgabe zugrunde, eine Vorrichtung und ein Koppelgerät zur Sicherung eines Datenzugriffs eines ersten Teilnehmers oder mehrerer Teilnehmer, die in einem ersten Teilnetz eines Automatisierungsnetzes angeordnet sind, auf einen zweiten Teilnehmer oder mehrere Teilnehmer, die in einem zweiten Teilnetz des Automatisierungsnetzes angeordnet sind, zu schaffen, die sich durch einen besonders geringen Aufwand auszeichnen.

Zur Lösung dieser Aufgabe weist eine Vorrichtung der eingangs genannten Art die in Anspruch 1 angegebenen Merkmale bzw. ein Koppelgerät die in Anspruch 7 angegebenen Merkmale auf. In den abhängigen Ansprüchen sind vorteilhafte Weiterbildungen der Erfindung beschrieben.

Unter dem Begriff "Tunnel" wird im Zusammenhang dieser Erfindung eine Verbindung zwischen zwei oder mehr Teilnehmern des Automatisierungsnetzes verstanden, die bezüglich Authentizität, Integrität und/oder Vertraulichkeit eine in vorteilhafter Weise sichere Datenübertragung gewährleistet. Durch den Tunnel werden die gesamten Telegrammdaten, also Nutzdaten und Header-Informationen eines Telegramms, gesichert übertragen. Zum Aufbau eines Tunnels sind gemeinsame Geheimnisse (Shared Secrets) notwendig. Wird der Tunnel zwischen zwei Partnern aufgebaut, so müssen beide Partner das gleiche Shared Secret oder ein zueinander passendes Public/Private-Key-Paar besitzen. Soll der Tunnel auf mehr als zwei Partner (globaler Tunnel) ausgedehnt werden, so müssen beispielsweise Shared Keys auf alle beteiligten Teilnehmer verteilt werden. Im Falle der Verwendung von Public/Private-Keys müssen bei mehr als zwei Partnern alle Partner untereinander derartige Schlüsselpaare besitzen. Bei der Ver- oder Entschlüsselung von Daten muss das jeweils für den aktuellen Partner geltende Schlüsselpaar herangezogen werden. Die Verwendung von Public/Private-Key-Paaren ist allerdings besonders in größeren Systemen eher kompliziert und aufwendig. Im Falle eines Shared Secrets ist das Verfahren einfach, da alle Teilnehmer den gleichen Schlüssel besitzen, der für alle Teilnehmer verwendbar ist.

Die Erfindung erlaubt neben der Entkopplung von Büronetz und Produktionsnetz zudem einen aufwandsarmen Schutz von Teilnetzen, z. B. Automatisierungszellen, innerhalb des Produktionsnetzes. Dadurch sind unbeabsichtigte Wechselwirkungen, wie sie z. B. in einer Inbetriebnahmephase von Teilabschnitten auftreten können, vermeidbar. Mögliche interne Angreifer, die Zugang zum Produktionsnetz bekommen, z. B. Mitarbeiter von Montagefirmen, werden in ihren Möglichkeiten zur Störung des Automatisierungssystems deutlich eingeschränkt.

Die Realisierung eines Tunnelendpunktes erfolgt in einem Switch mit Software und/oder Hardwaremodulen. Dieser übernimmt eine Stellvertreterfunktion für Geräte, die nicht selbst in der Lage sind, einen Tunnelendpunkt zu realisieren. Damit ist die Vorrichtung zur Sicherung eines Datenzugriffs in vorteilhafter Weise rückwirkungsfrei in bereits bestehenden Automatisierungsnetzen anwendbar. Rückwirkungsfrei bedeutet in diesem Zusammenhang, dass die Teilnehmer des bestehenden Netzwerks nicht bezüglich ihrer Adressierung, des jeweiligen Subnetzes oder ihrer Parametrierung geändert werden müssen. Dazu erfolgt die Zuordnung des Tunnels zum jeweiligen Teilnehmer in vorteilhafterweise anhand der jeweiligen Teilnehmeradresse, das heißt anhand der Adresse des bzw. der Teilnehmer, für den bzw. die der Tunnel stellvertretend durch die Vorrichtung aufgebaut wird. Vorzugsweise wird als Teilnehmeradresse eine IP-Adresse verwendet. Alternativ kann hierzu die Ethernet-MAC-Adresse verwendet werden. Die Entscheidung, welcher Tunnel bei einer gewünschten Datenübertragung zu verwenden ist, wird also anhand der Adressen der beteiligten Endgeräte vorgenommen. Bei IP-fähigen Teilnehmern kann das die IP-Adresse sein, bei Geräten, die über Ebene-2-Protokolle kommunizieren, die MAC-Adresse. Die für den Tunnelaufbau erforderlichen Ressourcen werden nur im vorgeschalteten Switch benötigt, so dass die dahinter befindlichen Teilnehmer oder Teilnetze mit geringeren Ressourcen auskommen. Zudem kann in geschalteten Netzwerken, so genannten Switched Networks, ein ohnehin vorhandener Switch durch einen Secure-Switch zur Sicherung des Datenverkehrs ersetzt werden. Der Einsatz der Erfindung ist dann mit einem besonders geringen Aufwand verbunden.

Aufgrund der Verwendung eines Secure-Switches als Stellvertreter für einzelne Teilnehmer oder mehrere Teilnehmer, die sich in einem Teilnetz befinden, lässt sich die Vorrichtung zur Sicherung eines Datenzugriffs nachträglich in bestehende Netzwerke integrieren, ohne dass hierzu größere Umstellungen der Teilnehmerparametrierung erforderlich wären. Die Automatisierungsgeräte, die unter Umständen Altgeräte sein können und über geringe Leistungsressourcen verfügen, können unverändert bleiben. Lediglich die Secure-Switches als Stellvertreter müssen aufeinander abgestimmt werden. Neben dem Aspekt der Weiterverwendbarkeit der Altgeräte kann diese Eigenschaft beispielsweise auch dann von Bedeutung sein, wenn die Parametrierung auf den Automatisierungsgeräten selbst nicht mehr verändert werden darf, z. B. weil sie von Prüfstellen abgenommen wurden und Änderungen neue Prüfungen oder Nachweise erfordern würden. Durch den Secure-Switch als Stellvertreter werden die nachgeschalteten Teilnehmer vom unsicheren Netz getrennt. Sie können in der Regel Kommunikation von außen über die Tunnel ohne Weiteres akzeptieren. Bei anderer Kommunikation muss jedoch geprüft werden, ob sie für die Teilnehmer zugelassen ist. Diese Prüfung erfordert Ressourcen. Zudem können viele Broadcast-Telegramme oder zusätzliche Belastungen beispielsweise aufgrund von UDP-Flooding-Angriffen aus dem Büronetz zu erheblicher Last am Tunnelendpunkt führen. Wird der Tunnelendpunkt im Secure-Switch als Stellvertreter realisiert, so fällt die Last bei diesem an. Die Ressourcen der nachgeschalteten Teilnehmer können im Automatisierungsnetz weiterhin vollständig für die automatisierungstechnischen Funktionen genutzt werden. Würde die Last bei diesen Teilnehmern bewältigt werden müssen, könnten sie bei der Erfüllung ihrer automatisierungstechnischen Funktionen beeinträchtigt werden und schlimmstenfalls ausfallen. Ohne Stellvertreter wären die Automatisierungsgeräte als Netzwerkteilnehmer direkt am unsicheren Netz sichtbar und daher auch angreifbar. Bei Fehlern in der Implementierung eines auf den Teilnehmern selbst abgewickelten Tunnelprotokolls könnten sie bei Angriffen in ihrer Funktion beeinträchtigt werden.

Da die Verwendung sicherer Tunnel nicht nur einen Zugriffsschutz sondern zudem einen Schutz der Daten vor Abhören und Veränderung (Privacy, Integrity) gewährleistet, kann die Übertragung der Daten beispielsweise zwischen zwei Secure-Switches über ein unsicheres Netz erfolgen. In diesem Bereich werden an die Sicherheit der Übertragungsmedien keine Securityanforderungen gestellt. Paarweise Tunnel, das heißt Tunnel zwischen zwei Teilnehmern, ermöglichen es, die einzelnen bilateralen Verbindungen bezüglich der Übertragungssicherheit voneinander zu trennen. Ein globaler Tunnel, das heißt ein Tunnel mit mehr als zwei Endpunkten, kann gegenüber einem paarweisen Tunnel zum Sparen von Ressourcen beitragen, die gerade in Automatisierungsgeräten oft begrenzt sind. Das Mischen paarweiser Tunnel und globaler Tunnel, das heißt die gleichzeitige Existenz verschiedenartiger Tunnel, ermöglicht eine bessere Skalierung des Automatisierungsnetzes. Besonders wichtige Kommunikationsverbindungen werden über paarweise Tunnel, weniger kritische Verbindungen über einen gemeinsamen, globalen Tunnel eingerichtet.

Da in der Automatisierungstechnik im Unterschied zur Bürotechnik Netzwerke projektiert werden, können bei geeigneter Auslegung eines Projektierungstools aus dieser Projektierung eine Reihe von Parametrier- und/oder Konfigurierdaten für den Secure-Switch abgeleitet werden. Für die Konfigurierung werden somit keine oder geringe IT-Kenntnisse eines Bedieners vorausgesetzt. Projektiert und/oder parametriert werden üblicherweise die Geräte des Automatisierungssystems und ihre Netzwerkverbindungen. Die Projektierung der Kommunikationsverbindungen ist nötig, damit eine Kommunikation zwischen den Geräten ermöglicht wird. Aus der Projektierung des Netzes und der Kommunikationsteilnehmer lassen sich beispielsweise als Information ableiten:
- welches Gerät kommuniziert mit welchem anderen Gerät,
- welche Protokolle werden bei der Kommunikation benutzt,
- in welcher Richtung erfolgt die Kommunikation und/oder
- über welche gegebenenfalls alternativen Wege kann die Kommunikation ablaufen.

Ein Projektierungstool kann so erweitert werden, dass auch die Sicherheitseinrichtungen und insbesondere der verwendete Secure-Switch projektiert werden. Wird der Secure-Switch in einer Verbindung zwischen zwei Teilnehmern platziert, so lassen sich aus der Projektierung beispielsweise folgende Informationen zusätzlich ableiten:
- welche Netze und/oder Geräte befinden sich hinter dem Secure-Switch,
- welche Geräte hinter dem Secure-Switch kommunizieren mit welchen Geräten hinter einem zweiten Secure-Switch,
- welche Geräte hinter dem Secure-Switch sind selbst in der Lage, sichere Tunnel aufzubauen, so dass der Secure-Switch verschlüsselte Telegramme einfach weiterreichen kann.

Aus solchen Informationen lassen sich für die Parametrierung des Secure-Switches Informationen ableiten wie:
- zwischen welchen Secure-Switches und/oder Teilnehmern sind sichere Tunnel aufzubauen und welcher Art sind diese Tunnelverbindungen (z. B. Host zu Netz, Netz zu Netz, Host zu Host),
- zwischen welchen Secure-Switches und/oder Teilnehmern ist eine Authentifizierung notwendig und welche dieser Geräte müssen gemeinsame Geheimnisse besitzen oder auch wo werden welche Zertifikate bei einer zertifikatsbasierten Authentifizierung benötigt und/oder
- welche Sicherheitsregeln sind für welche Verbindungen einzusetzen.

Beispielsweise können Verbindungen von einem Programmiergerät zu einem Bürorechner im Büronetz ohne Sicherung betrieben werden, das heißt die Daten werden vom Secure-Switch durchgeleitet, während Verbindungen von einem Programmiergerät zu einer Automatisierungszelle über einen weiteren Secure-Switch zu sichern sind, das heißt ein Tunnel zwischen den beiden Secure-Switches aufzubauen ist.

Die Verwendung des Layer 3 (Network-Layer) des ISO-OSI 7-Schichten-Modells als Basis für das Tunnelprotokoll bietet den Vorteil der Kompatibilität mit der in Automatisierungsnetzen vorhandenen Infrastruktur. Damit können auch Ebene-2-Pakete, wie sie in der Automatisierungstechnik zum Teil vorkommen, getunnelt werden.

Besonders vorteilhaft bietet sich die Realisierung eines Tunnelendpunkts durch einen Layer-3-Port mit IPsec-Protokoll eines Secure-Switches an, der als Ethernet-Switch ausgebildet ist. Damit wird ein außerhalb der Automatisierungstechnik bereits weit verbreitetes und erprobtes Protokoll verwendet. Im Falle von IPsec als Basis für das Tunnelprotokoll können Personal Computer mit üblichen Betriebssystemen als Tunnelendpunkt arbeiten.

Prinzipiell könnte als Secure-Switch auch ein Layer 4-Switch eingesetzt werden, der einen Tunnelendpunkt mit einem Layer 4-Protokoll realisiert, beispielsweise auf der Basis von SSL, Kerberos oder SSH anstelle des IPsec-Protokolls. Natürlich müssen auch hier zur Übertragung durch den Tunnel Ethernet-Pakete zuvor in IP-Pakete eingepackt werden, beispielsweise mit EtherIP, ehe sie durch das Security Protokoll, in diesem Fall SSL, Kerberos oder SSH, geschickt werden.

Wenn der Secure-Switch zumindest einen Port besitzt, der als WLAN-Endpunkt ausgebildet und zur Realisierung eines Tunnelendpunkts geeignet ist, kann Verdrahtungsaufwand und Platzbedarf eingespart werden. Dabei werden durch das Konzept des Secure-Switches keine besonderen Security-Anforderungen an den WLAN-Endpunkt gestellt. Beispielsweise ist keine WEP (wired equivalent privacy)-Sicherheitsarchitektur für den WLAN erforderlich, die eine Datenverschlüsselung und evtl. eine Authentifikation eines Teilnehmergeräts gegenüber dem WLAN-Endpunkt ermöglicht. Selbstverständlich können vorhandene Sicherheitsmechanismen im WLAN-Endpunkt, beispielsweise MAC-Adressenbeschränkungen, weiterhin beibehalten werden. Durch die Verwendung eines Tunnels kann der WLAN-Endpunkt nun aber über sichere Kommunikationswege konfiguriert werden. Als Beispiel sei die Einstellung zulässiger MAC-Adressen im WLAN-Endpunkt genannt. Das Tunnelende befindet sich vorteilhaft zwischen dem WLAN-Endpunkt und der zentralen Switch-Matrix des Secure-Switches.

In vorteilhafter Weise wird die konstruktive Ausgestaltung des Switches derart gewählt, dass er für den Einsatz in einem Automatisierungssystem geeignet ist. Je nach Einsatzfall wird er so ausgelegt, dass die erforderliche Schutzklasse, beispielsweise Staub-, Wasser- oder Explosionsschutz, eingehalten wird. Bei geeigneter Wahl der Bauform ist eine Hutschienen- oder Schrankmontage möglich. Vorteilhaft ist eine Stromversorgung mit geringer Spannung, beispielsweise 24 V.

Wenn ein zur Realisierung eines Tunnelendpunkts geeigneter Port von anderen Ports des Secure-Switches durch eine Markierung unterscheidbar ist, so hat dies den Vorteil, dass die Verkabelung vereinfacht und Verkabelungsfehler reduziert werden.

Das Sicherheitsgefühl eines Anwenders wird erhöht, wenn der Zustand durch eine visuell erkennbare Markierung angezeigt wird. Erlaubt ein Port eines Secure-Switches die Übertragung von sicheren und unsicheren Telegrammen, so kann dieser mit einer umschaltbaren Markierung gekennzeichnet werden.

Eine Realisierungsmöglichkeit ist beispielsweise eine farblich umschaltbare Leuchtdiode, die, wenn in der augenblicklichen Konfiguration nur gesicherte Übertragung erfolgen kann, grün leuchtet, in einem anderen Fall, wenn in der augenblicklichen Konfiguration gesicherte und ungesicherte Übertragung erfolgen kann, gelb leuchtet, und bei ausschließlich ungesicherter Übertragung auf rot schaltet. Neben der Konfigurationsanzeige kann auch eine dynamische Verkehrsanzeige vorteilhaft sein, die, um die Sichtbarkeit zu verbessern, mit geeigneter Verlängerung der Anzeigedauer arbeitet. Beispielsweise kann jedes ungesichert übertragene Paket durch eine kurz gelb leuchtende Leuchtdiode und jedes gesichert übertragene Paket durch eine kurz grün leuchtende Leuchtdiode angezeigt werden. Bei Mischübertragung ergibt sich daraus ein Flackern der Leuchtdiode. Für das Netzwerkmanagement ist es zusätzlich vorteilhaft, wenn die Anzeige über den Sicherheitszustand des Ports automatisch, beispielsweise über SNMP-Protokoll, abfragbar ist.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Blockschaltbild eines Automatisierungsnetzes und
- Figur 2: ein Blockschaltbild eines Secure-Switches.

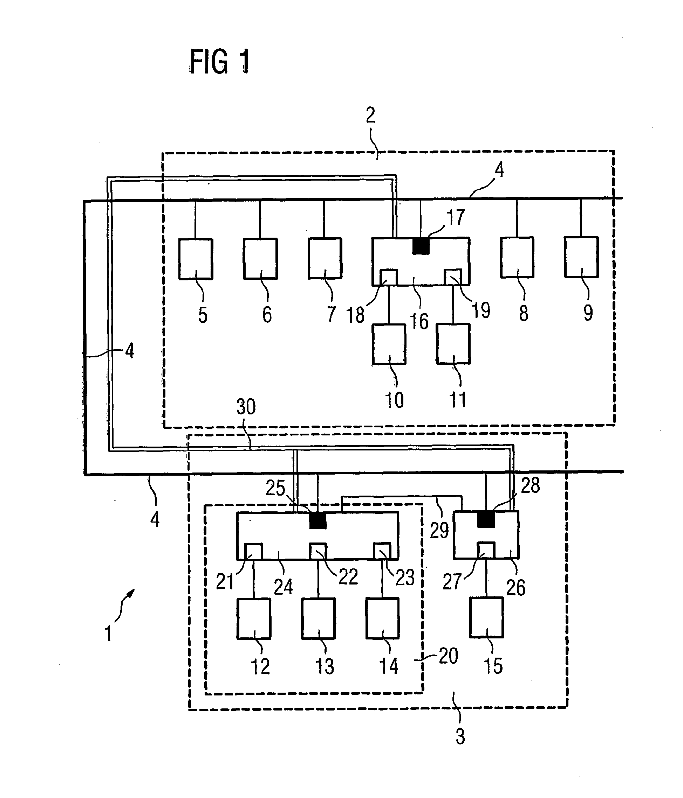

In Figur 1 ist der prinzipielle Aufbau eines Automatisierungsnetzes 1 dargestellt. Gezeigt sind im Wesentlichen die an der Kommunikation teilnehmenden Geräte, häufig als Teilnehmer bezeichnet, und dazu erforderliche physikalische Verbindungen. Weitere Teile des Automatisierungssystems in einer prozesstechnischen Anlage sind der Übersichtlichkeit wegen nicht dargestellt. Das Automatisierungsnetz 1 ist in dieser Darstellung unterteilt in ein Büronetz 2 und ein Produktionsnetz 3. Diese Darstellung wurde in Anlehnung an die bisherige Situation gewählt, in welcher Büronetz und Produktionsnetz voneinander getrennt ausgebildet und über ein Gateway miteinander verbunden waren. Über das Büronetz eingetragene Hackerangriffe konnten daher nur schwer in das Produktionsnetz gelangen. In dem gezeigten Ausführungsbeispiel sind Büronetz 2 und Produktionsnetz 3 über eine Leitung 4 direkt miteinander verbunden und damit quasi verschmolzen. Die Datenübertragung erfolgt in beiden Netzen beispielsweise mit Ethernet TCP/IP. Im Büronetz 2 befinden sich nicht prozessnahe Geräte, z. B. ein Server 5, Büro PCs 6, 7, 8 und 9, ein Bedien- und Beobachtungsgerät 10 und Programmiergerät 11, die zum Teil einer zentralen Leitebene der herkömmlichen Struktur zugeordnet werden können. Prozessnahe Geräte, z. B. ein Automatisierungsgerät 12, ein Messumformer 13, ein Bedien- und Beobachtungsgerät 14 und ein Programmiergerät 15 sind in dem Produktionsnetz 3 angeordnet. Dem Bedien- und Beobachtungsgerät 10 sowie dem Programmiergerät 11 ist ein Secure-Switch 16 vorgeschaltet, der mit einem Secure-Port 17, das heißt einem Port, der zur Realisierung eines Tunnelendpunkts geeignet ist, an die Netzleitung 4 angeschlossen ist. Die Geräte 10 und 11 sind an Ports 18 bzw. 19 des Secure-Switches 16 angeschlossen, die keine derartige Sicherheitseinrichtung aufweisen müssen. Im Produktionsnetz 3 sind die Geräte 12, 13 und 14 in einem Teilnetz 20 angeordnet und dazu mit Ports 21, 22 bzw. 23 eines Secure-Switches 24 verbunden. Ein Secure-Port 25 des Secure-Switches 24 ist an die Verbindungsleitung 4 des Automatisierungsnetzes 1 angeschlossen. Ein Secure-Switch 26 mit einem Port 27 und einem Secure-Port 28, der mit dem Programmiergerät 15 bzw. der Verbindungsleitung 4 verbunden ist, ist dem Programmiergerät 15 vorgeschaltet. Zur Sicherung der Datenübertragung zwischen dem Programmiergerät 15, dem Automatisierungsgerät 12, dem Messumformer 13 und dem Bedien- und Beobachtungsgerät 14 ist zwischen dem Secure-Switch 24 und dem Secure-Switch 26 ein paarweiser Tunnel 29 eingerichtet. Dieser Tunnel ist mit einem symmetrischen Verschlüsselungsverfahren realisiert, in welchem beide Secure-Switches 24 und 26 über einen geheimen Schlüssel verfügen. Ein globaler Tunnel 30 verbindet die Secure-Switches 24, 26 und 16 miteinander, die über ein gemeinsames Geheimnis zur Ver- und Entschlüsselung der Telegramme verfügen. Die Tunnel 29 und 30 sind lediglich zur besseren Verdeutlichung in Figur 1 getrennt von der Verbindungsleitung 4 dargestellt. Selbstverständlich werden durch Tunnel übertragene Telegramme über die Verbindungsleitung 4 übertragen. Der Messumformer 13 ist ein vergleichsweise einfaches Gerät mit geringer Rechenleistung und daher nicht selbst in der Lage, einen Tunnelendpunkt zu realisieren. Für dieses Gerät sowie für die beiden weiteren, in dem Teilnetz 20 befindlichen Geräte 12 und 14 bildet der Secure-Switch 24 einen Stellvertreter zur Tunnelendpunktrealisierung. In entsprechender Weise übernehmen auch die Secure-Switches 16 und 26 eine Stellvertreterfunktion. Die Secure-Switches 16, 24 und 26 sind Layer-3-Switches, die zur Realisierung der Tunnelendpunkte das IPsec-Protokoll verwenden.

Zur Unterscheidung von den Ports 18, 19, 21, 22, 23 und 27, die wie übliche Ports eines Switches nicht in der Lage sind, einen Tunnelendpunkt zu realisieren, sind die Ports 17, 25 und 28 der Secure-Switches 16, 24 bzw. 26 mit einer farblichen Markierung, im gezeigten Ausführungsbeispiel mit einer schwarzen Markierung, versehen.

Alternativ zu dem dargestellten Ausführungsbeispiel des Automatisierungsnetzes 1 könnte der Switch 16 entfallen, wenn das Bedien- und Beobachtungsgerät 10 sowie das Programmiergerät 11 selbst in der Lage wären, einen Tunnelendpunkt zu realisieren. In diesem Fall wären diese Geräte direkt an die Verbindungsleitung 4 angeschlossen und ein globaler Tunnel hätte jeweils einen Endpunkt beim Bedien- und Beobachtungsgerät 10, beim Programmiergerät 11 sowie in gleicher Form, wie anhand Figur 1 zuvor beschrieben, bei den Secure-Switches 24 und 26. Diese Variante hätte jedoch den Nachteil, dass die Ressourcen zur Realisierung eines Tunnelendpunkts in den beiden Geräten 10 und 11 benötigt würden, so dass für ihre eigentlichen Funktionen der Automatisierungstechnik geringere Kapazitäten zur Verfügung stünden. Das gemeinsame Geheimnis müsste dann bei allen Tunnelendpunkten, das heißt in den Geräten 10 und 11 sowie in den Secure-Switches 24 und 26 gehalten werden.

Durch die Verwendung des Switches 24 im Teilnetz 20 sind sämtliche Verbindungen der Netzwerkteilnehmer, hier des Automatisierungsgeräts 12, des Messumformers 13 und des Bedien- und Beobachtungsgeräts 14 durch Punkt-zu-Punkt-Verbindungen realisiert. Eine derartige Struktur wird häufig als geschaltetes Netzwerk, insbesondere als Switched-Ethernet, bezeichnet. Zusammen mit anderen Maßnahmen erlaubt es diese, die in einer Automatisierungsumgebung geforderten Echtzeitbedingungen zu erfüllen.

Das Programmiergerät 11 dient im Automatisierungsnetz 1 als Projektierungstool, mit welchem neben der in Automatisierungsnetzen üblichen Projektierung bei der Verwendung von Secure-Switches der Projekteur zusätzlich festlegt, in welchem Netz sich die Secure-Switches befinden und welche dahinterliegenden Teilnehmer durch ihn geschützt werden sollen. Diese Eingaben sind für einen Automatisierungstechniker in der Regel leicht vorzunehmen. Beispielsweise wird vor alle Geräte, die zu einer Produktionszelle gehören, wie im gezeigten Ausführungsbeispiel vor die Geräte 12, 13 und 14, ein Secure-Switch, hier der Secure-Switch 24, gesetzt. Mit dem Projektierungstool werden die Kommunikationspartner sowie deren Adressen, z. B. IP-Adressen, Netzwerkverbindungen, über die diese Kommunikationspartner miteinander verbunden sind, Automatisierungsfunktionen und deren Kommunikation untereinander sowie die Position der Secure-Switches im Netzwerk festgelegt. Anhand dieser Festlegungen können für den Aufbau der Tunnel beispielsweise folgende Parameter automatisch ermittelt werden: Adressen der einzelnen Tunnelendpunkte, mit welchen anderen Tunnelendpunkten muss ein bestimmter Tunnelendpunkt Tunnel aufbauen, Erzeugung der Geheimnisse und/oder Zertifikate.

Durch Eigenschaften der Secure-Switches, Anwendungsprofile oder durch projektglobale Einstellungen beim Anwender kann festgelegt werden, welche Ports von Switches sicher sind, welches Tunnelprotokoll zu verwenden ist und/oder welche Sicherheitseinstellungen verwendet werden, z. B. Verschlüsselungsmethode, Integritätsschutzmethode, Authentifizierungsmethode, Gültigkeitsdauer der Schlüssel usw.

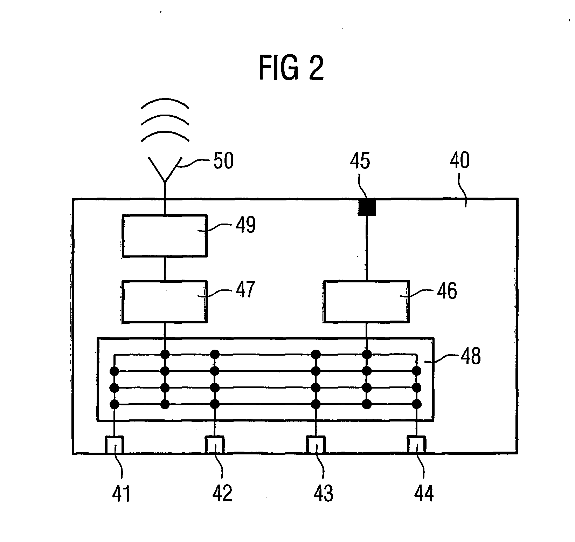

Figur 2 zeigt den prinzipiellen Aufbau eines Secure-Switches 40. Der Aufbau des Secure-Switches 40 ist ähnlich dem eines herkömmlichen, so genannten manageable Switches, der über eine eigene IP-Adresse oder über eine zusätzliche, in Figur 2 der Übersichtlichkeit wegen nicht dargestellte serielle Schnittstelle ansprechbar ist. Ports 41, 42, 43 und 44 sind "normale" Ports und in der bei herkömmlichen Switches üblichen Weise ausgestaltet. Der Port 45 ist ein sicherer Port, ein so genannter Secure-Port, der in der Lage ist, einen Tunnelendpunkt zur gesicherten Übertragung von Daten zu einem anderen Tunnelendpunkt zu realisieren. Dazu wurde er gegenüber einem herkömmlichen Port um einen so genannten Secure Channel Converter 46 ergänzt. Ein weiterer Secure Channel Converter 47 befindet sich zwischen einer Switch-Matrix 48 und einem WLAN-Endpunkt 49, der die Funktionen eines WLAN-Access-Point erfüllt und mit welchem über eine Antenne 50 drahtlose Kommunikation mit einem Tunnelprotokoll durchgeführt werden kann. Bezüglich der Sicherheitsfunktionen unterscheidet sich dieser Port für drahtlose Kommunikation nicht von dem drahtgebundenen Secure-Port 45, so dass es genügt, die Funktionen des Secure-Switches 40 anhand des Secure-Ports 45 zu erläutern. Alle Telegramme, die aus dem Secure-Port 45 gesendet werden, durchlaufen den Secure Channel Converter 46. Ein Ethernet-Paket wird je nach Erfordernis gesichert, z. B. in ein IP-Paket überführt und mit dem IPsec-Protokoll gesichert. Danach ist das Telegramm wie ein normales Paket des Tunnelprotokolls aufgebaut und kann über eine IP-Infrastruktur, die beispielsweise auch Router enthält, transportiert werden. Die Sicherungsmechanismen verhindern unerlaubte Veränderungen und unerlaubtes Mithören des Tunnelpakets. Im Empfangsbetrieb wird das Paket nach dem Empfang zunächst beispielsweise auf folgende Eigenschaften geprüft:
- ist die maximal zulässige Empfangsdatenrate überschritten (DoS-Schutz),
- ist das empfangene Telegramm vom Typ des Tunnelprotokolls, bei IPsec z. B. AH oder ESP,
- stammt das Paket von einem berechtigten Sender (Authentifizierung),
- ist das Paket unverändert (Integrität) und/oder
- wurde das Paket bereits empfangen (Replay-Schutz) ?

Fällt eine dieser Prüfungen negativ aus, so wird das Paket verworfen und gegebenenfalls ein Logging-Eintrag für eine Systemanalyse vorgenommen.

Werden diese Prüfungen erfolgreich absolviert, so wird das Paket in entpackter Form, das heißt in der ursprünglich durch den Teilnehmer gesendeten Form, an den Empfänger weitergeleitet. Die Entpackung kann gegebenenfalls eine Entschlüsselung einschließen. Im Secure-Switch kann das entpackte Paket zuvor optional weiteren Prüfungen im Sinne üblicher Paketfilter unterzogen werden. Dadurch ist es möglich, einen feiner abgestuften Zugriffsschutz zu realisieren. Dieser basiert beispielsweise auf IP-Adressen, denen hier vertraut werden kann, da die Pakete über einen sicheren Tunnel angekommen sind. Nach den Prüfungen und dem Entpacken im Security-Channel-Konverter 46 wird das Paket in herkömmlicher Weise über die Switch-Matrix 48 an einen der Switch-Ports 41...44 weitergeleitet und so an den Empfangsteilnehmer übergeben.

Die Realisierung der Stellvertreterfunktion durch einen Secure-Switch hat gegenüber der Verwendung eines bekannten VPN-Routers beispielsweise den Vorteil, dass er für den nachträglichen Einbau in vorhandene flache Netze, wie sie in der Automatisierungstechnik häufiger anzutreffen sind, geeignet ist. Ein VPN-Router würde nämlich eine Bildung von Subnetzen erfordern, weiterhin eine spezielle Konfiguration auf den Teilnehmern, die sicher über den VPN-Tunnel kommunizieren wollen, da die IP-Adresse des VPN-Routers als Gateway bei allen Kommunikationspartnern eingetragen werden muss, und der VPN-Router könnte nur IP-Pakete tunneln. Ebene-2-Pakete, wie sie in der Automatisierungstechnik zum Teil vorkommen, würden durch den VPN-Router daher nicht getunnelt und nach Einführen von VPN-Routern im Automatisierungsnetz würden nicht mehr alle Protokolle funktionieren. Dagegen kann der beschriebene Secure-Switch 40 nahezu rückwirkungsfrei in ein bestehendes Netzwerk integriert werden. Er arbeitet wie ein herkömmlicher Switch, jedoch mit einem oder mehreren sicheren Ports. Damit benötigt er keine oder - je nach Realisierung - eine IP-Adresse, keine Subnetz-Bildung, keine Neukonfiguration der an der Kommunikation beteiligten Endgeräte und der gesamte Verkehr ab Ebene 2 des 7-Schichten-Modells kann getunnelt werden.

## Patentansprüche

1. Vorrichtung zur Sicherung eines Datenzugriffs eines ersten Teilnehmers (11) oder mehrerer Teilnehmer (12...14), die in einem ersten Teilnetz (20) eines Automatisierungsnetzes (1) angeordnet sind, auf einen zweiten Teilnehmer (15) oder mehrere Teilnehmer (10, 11), die in einem zweiten Teilnetz des Automatisierungsnetzes (1) angeordnet sind, mit zumindest einem so genannten Secure-Switch (16, 24, 26), der dem ersten Teilnehmer (11) bzw. den Teilnehmern (12...14) des ersten Teilnetzes (20) vorgeschaltet ist, zum Aufbau eines so genannten Tunnels (29, 30) zu dem zweiten Teilnehmer (15) bzw. den Teilnehmern (10, 11) des zweiten Teilnetzes, durch welchen Daten über ein unsicheres Netzwerk gesichert übertragbar sind, wobei der Secure-Switch (16, 24, 26) als Ethernet-Switch und zumindest ein Port (17, 25, 28) als Layer-3-Port zur Realisierung eines Tunnelendpunkts gemäß dem IPsec-Protokoll ausgebildet ist und wobei der Secure-Switch (16, 24, 26) den Tunnel stellvertretend für den ersten Teilnehmer (11) bzw. stellvertretend für die Teilnehmer (12...14) des ersten Teilnetzes (20) aufbaut und den Tunnel diesem bzw. diesen anhand der jeweiligen Teilnehmeradresse zuordnet.

2. Vorrichtung nach Anspruch 1, **dadurchgekennzeichnet**, dass ein Projektierungstool (11) vorgesehen ist zur Projektierung des Automatisierungsnetzwerks (1), durch welches Parameterdaten des Secure-Switches (16, 24, 26) automatisch erzeugbar und zum Secure-Switch übertragbar sind.

3. Vorrichtung nach Anspruch 1 oder 2, **dadurch gekennzeichnet, dass** der Secure-Switch (40) zumindest einen Port (47, 49, 50) besitzt der als WLAN-Endpunkt ausgebildet und zur Realisierung eines Tunnelendpunkts geeignet ist.

4. Vorrichtung nach einem der vorhergehenden Ansprüche, **dadurch gekennzeichnet, dass** der Secure-Switch konstruktiv für den Einsatz in einem Automatisierungssystem geeignet ist.

5. Vorrichtung nach einem der vorhergehenden Ansprüche, **dadurch gekennzeichnet, dass** ein zur Realisierung eines Tunnelendpunkts geeigneter Port (45) von anderen Ports (41...44) des Secure-Switches (40) durch eine Markierung unterscheidbar ist.

6. Vorrichtung nach Anspruch 5, **dadurch gekennzeichnet, dass** die Markierung umschaltbar ist.

7. Koppelgerät, so genannter Secure-Switch, zur Sicherung eines Datenzugriffs eines ersten Teilnehmers oder mehrerer Teilnehmer, die in einem ersten Teilnetz eines Automatisierungsnetzes angeordnet sind, auf einen zweiten Teilnehmer oder mehrere Teilnehmer, die in einem zweiten Teilnetz des Automatisierungsnetzes angeordnet sind, wobei der Secure-Switch dem ersten Teilnehmer bzw. den Teilnehmern des ersten Teilnetzes vorschaltbar ist, wobei der Secure-Switch (16, 24, 26) als Ethernet-Switch und zumindest ein Port (17, 25, 28) als Layer-3-Port zur Realisierung eines Tunnelendpunkts gemäß dem IPsec-Protokoll ausgebildet ist und wobei der Secure-Switch (16, 24, 26) eine Einrichtung (46), einen so genannten Secure Channel Converter, aufweist zum Aufbau eines so genannten Tunnels zu dem zweiten Teilnehmer bzw. den Teilnehmern des zweiten Teilnetzes, durch welchen Daten über ein unsicheres Netzwerk gesichert übertragbar sind, wobei der Tunnel stellvertretend für den ersten Teilnehmer bzw. die Teilnehmer des ersten Teilnetzes aufbaubar ist und diesem bzw. diesen anhand der jeweiligen Teilnehmeradresse zuordenbar ist.

## Claims

1. Device for securing data access of a first subscriber (11) or a plurality of subscribers (12...14) arranged in a first sub-network (20) of an automation network (1) to a second subscriber (15) or a plurality of subscribers (10, 11) which are arranged in a second sub-network of the automation network (1), said device comprising at least one so-called secure switch (16, 24, 26) connected upstream of the first subscriber (11) or the plurality of subscribers (12....14) of the first sub-network (20) for establishing a so-called tunnel (29, 30) to the second subscriber (15) or the plurality of subscribers (12...14) of the second sub-network, through which data can be securely transmitted via an insecure network, wherein the secure switch (16, 24, 26) is embodied as an Ethernet switch and at least one port (17, 25, 28) as a layer-3-port for establishing a tunnel end point in accordance with the Ipsecprotocol, and wherein the secure switch (16, 24, 26) establishes the tunnel representative for the first subscriber (11) or for the plurality of subscribers (12...14) of the first sub-network (20) and allocates said tunnel to said first subscriber (11) or plurality of subscribers (12...14) of the first sub-network (20) using the respective subscriber address.

2. Device according to claim 1, **characterised in that** a projection tool (11) is provided for projecting the automation network (1), through which parameter data related to the secure switch (16, 24, 26) can be automatically generated and transmitted to the secure switch.

3. Device according to claim 1 or 2, **characterised in that** the secure switch (40) comprises at least one port (47, 49, 50) embodied as a WLAN end point for establishing a tunnel end point.

4. Device according to one of the preceding claims, **characterised in that** the secure switch is suitable in terms of its construction for use in an automation system.

5. Device according to one of the preceding claims, **characterised in that** a suitable port (45) for implementing a tunnel end-point can be differentiated from other ports (41...44) of the secure switch (40) by a marker.

6. Device according to claim 5, **characterised in that** the marker can be switched over.

7. Coupling device, so-called secure-switch, for securing data access of a first subscriber or a plurality of subscribers arranged in a first sub-network of an automation network to a second subscriber or a plurality of subscribers arranged in a second sub-network of the automation network, wherein the secure switch can be connected upstream of the first subscriber or the plurality of subscribers of the first sub-network, wherein the secure switch (16, 24, 26) is embodied as an Ethernet switch and at least one port (17, 25, 28) as a layer-3-port for establishing a tunnel end point in accordance with the IPsec protocol, and wherein the secure switch (16, 24, 26) has a device (46), a so-called Secure Channel Converter, for establishing a so-called tunnel to the second subscriber or the plurality of subscribers of the second sub-network, through which data can be transmitted securely via an insecure network, wherein the tunnel can be established that is representative for the first subscriber or the plurality of subscribers of the first sub-network and allocated to the first subscriber or the plurality of subscribers of the first sub-network using the respective subscriber address.

## Revendications

1. Dispositif pour sécuriser un accès à des données d'un premier participant ( 11 ) ou de plusieurs participants ( 12... 14 ), qui sont disposées dans un premier sous-réseau ( 20 ) d'un réseau ( 1 ) d'automatisation, à un deuxième participant ( 15 ) ou à plusieurs participants ( 12, 11 ), qui sont disposés dans un deuxième sous-réseau du réseau ( 1 ) d'automatisation, comprenant au moins ce que l'on appelle un secure-switch ( 16, 24, 26 ), qui est monté en amont du premier participant ( 11 ) ou des participants ( 12... 14 ) du premier sous-réseau ( 20 ) pour la formation de ce que l'on appelle un tunnel ( 29, 30 ) allant vers le deuxième participant ( 15 ) ou les participants ( 12, 11 ) du deuxième sous-réseau, par lequel des données peuvent être transmises de manière sécurisée par l'intermédiaire d'un réseau qui n'est pas sécurisé, le secure-switch ( 16, 24, 26 ) étant constitué suivant le protocole Ipsec en ethernet-switch et au moins un accès (17, 25, 28 ) en layer3-port pour la réalisation d'un point d'extrémité de tunnel et dans lequel le secure-switch ( 16, 24, 26 ) représente le tunnel pour le premier participant ou pour les participants ( 12...14 ) du premier sous-réseau ( 20 ) et associe le tunnel à celui-ci ou à ceux-ci l'aide de l'adresse respective du participant.

2. Dispositif suivant la revendication 1, **caractérisé en ce qu'**il est prévu un outil ( 11 ) de projet, pour faire le projet du réseau ( 1 ) d'automatisation, outil par lequel des données de paramètre du secure-switch ( 16, 24, 26 ) peuvent être produites automatiquement et peuvent être transmises au secure-switch.

3. Dispositif suivant la revendication 1 ou 2, **caractérisé en ce que** le secure-switch ( 40 ) a au moins un accès ( 47, 49, 50 ) qui est constitué sous la forme d'un point d'extrémité WLAN et qui est propre à la réalisation d'un point d'extrémité de tunnel.

4. Dispositif suivant l'une des revendications précédentes, **caractérisé en ce que** le secure-switch est propre par construction à être utilisé dans un système d'automatisation.

5. Dispositif suivant l'une des revendications précédentes, **caractérisé en ce qu'**un accès ( 45 ) propre à la réalisation d'un point d'extrémité du tunnel peut être distingué d'autres accès (41... 44 ) du secure-switch ( 40 ) par un repérage.

6. Dispositif suivant la revendication 5, **caractérisé en ce que** le repérage est commutable.

7. Appareil de couplage, ce que l'on appelle un secure-switch, pour sécuriser un accès à des données d'un premier participant ou de plusieurs participants, qui sont disposés dans un premier sous-réseau d'un réseau d'automatisation, à un deuxième participant ou en plusieurs participants, qui sont disposés dans un deuxième sous-réseau du réseau d'automatisation, le secure-switch étant monté en amont du premier participant ou des participants du premier sous-réseau, le secure-switch ( 16, 24, 26) étant constitué, suivant le protocole Ipsec, en ethernet-switch et au moins un accès (17, 25, 28 ) en layer-3-port pour la réalisation d'un point d'extrémité de tunnel, et dans lequel le secure-switch ( 16, 24, 26 ) comporte un dispositif ( 46 ), ce que l'on appelle un secure channel converter, pour la formation de ce que l'on appelle un tunnel allant vers le deuxième participant ou les participants du deuxième sous-réseau, tunnel par lequel des données peuvent être transmises d'une manière sécurisée par un réseau qui n'est pas sécurisé, le tunnel pouvant être formé pour représenter le premier participant ou les participants du premier sous-réseau et être associé à celui-ci ou à ceux-ci, à l'aide de l'adresse respective du participant.
